Europäisches Patentamt

(19) European Patent Office

Office européen des brevets

(11) Publication number: **0 021 582**
**B1**

(12) **EUROPEAN PATENT SPECIFICATION**

(45) Date of publication of patent specification: **12.01.83**

(21) Application number: **80301565.0**

(22) Date of filing: **13.05.80**

(51) Int. Cl.³: **B 01 D 13/00, B 65 H 81/00**

(54) Method of making coreless hollow filament bundles for separatory modules and bundles made by said method.

(30) Priority: **28.06.79 US 52861**

(43) Date of publication of application:
**07.01.81 Bulletin 81/1**

(45) Publication of the grant of the patent:
**12.01.83 Bulletin 83/2**

(84) Designated Contracting States:
**AT BE CH DE FR GB IT LI LU NL**

(56) References cited:
CH - A - 436 559
DE - A - 2 304 839
FR - A - 1 333 894
FR - A - 2 231 421
FR - A - 2 242 129
FR - A - 2 340 892
FR - A - 2 380 362
GB - A - 1 175 689
US - A - 2 225 180

The file contains technical information
submitted after the application was filed and not
included in this specification

(73) Proprietor: **ALBANY INTERNATIONAL CORP.**
**1 Sage Road**
**Menands New York 12201 (US)**

(72) Inventor: **Sebring, Robert E.**
**17 Orchard Circle**
**Westwood Massachusetts 02090 (US)**

(74) Representative: **Jennings, Roy Alfred et al,**
**GILL, JENNINGS & EVERY 53/64 Chancery Lane**
**London WC2A 1HN (GB)**

Courier Press, Leamington Spa, England.

## Method of making coreless hollow filament bundles for separatory modules and bundles made by said method

The use of hollow monfilaments in connection with reverse osmosis and other separation and purification procedures is known and is shown for example in United States Patent No. 3,422,008, and in report PB 233,102 of the Monsanto Research Corporation, dated September, 1973, to the U.S. Department of the Interior.

Hollow filaments having permeable walls for installation in fluid separatory modules must be arranged in a bundle and be sealed in a tube sheet at one or both ends. A bundle of straight parallel filaments causes inefficiencies in the separatory process, and conversely a bundle comprising criss-crossed filaments with an even distribution of connected tortuous voids between the filaments can promote the separating efficiency.

A variety of methods is known for making the filament bundle. Many of these are intricate and many involve complex steps of winding with special machinery and the utilization of porous sheets which act as support members for the filaments.

In a separatory module, a properly assembled multifilament bundle must meet a number of requirements. Among these is a geometric arrangement which provides a fairly high packing density of the filaments and which at the same time minimizes channeling of the feed fluid as it passes among the filaments. Therefore, some method of keeping the filaments from packing densely in some ares and loosely in others is desirable. In other words, the packing density of the filaments in the bundle should be both very uniform, and in the order of about 25% to 60%, if some of the main advantages of the use of hollow filaments separatory modules are to be achieved. In view of these considerations the use of various filament assembly techniques is frequently unattractive.

An advantageous geometry to attain the desired result has been described in United States Patent No. 4,045,851. This geometry comprises an annular bundle of hollow filaments wound in a plurality of layers at a selected helix angle with alternate layers being of opposite helix direction. Further benefits of having a helical intermeshing orientation of the filaments to one another is shown in United States Patent No. 4,105,548 where a three-dimensional network in a helical wound arrangement of hollow filaments in multiple layers is described. In both the techniques described in both these Patents, however, the helical structure is achieved by winding the filaments on a mandrel, and this necessarily results in the formation of an annular bundle of filaments.

While these techniques provide the desired relatively uniform fine pore distribution of spaces among the filaments, in both cases the fact that the bundle is annular tends to offset some of the desired advantages of the use of a multi-filament bundle system. First, the presence of a core element which has to be provided to fill the central region of the annular bundle tends to reduce the effective total filament surface area attainable within the separatory module of which the filaments form part. Second, the formation of an annular bundle by winding the filaments helically upon a core or mandrel inherently limits the steepness of the helix angle to that attainable without undue slippage of the turns of the filament which is restrained only by frictional resistance of filament on filament. It is desirable for some purposes to provide helically wound filament bundles which are solid in that they have no central core space and in which the filaments are wound at extremely steep helix angles. This can be achieved to some limited extent by the method disclosed in United States Patent No. 4,045,851. There nevertheless remains with this method some residue of a hollow central space and it is therefore an object of the present invention to attain the desired advantages mentioned above.

Methods of making coreless filament bundles are disclosed in French specifications Nos. 2,231,421 and 2,340,892 in which a filament is wound on a former to form a coil of substantial radial thickness and then this coil is cut into segments each of which forms a bundle. With these known methods, however, the coil is wound in such a way that it cannot be ensured that the individual filaments follow helical paths in such a way that the filaments cross over each as is necessary.

The object of the present invention is to form coreless filament bundles by the winding and cutting technique just described, but in such a way that the filaments in the segments which form the bundles, follow improved helical paths crossing over each other.

According to this invention, such a method comprises providing a drum with a plurality of radially outwardly projecting and axially extending vanes spaced apart around the drum so that the tangential distances between the radially outer edges of the vanes is equal to or greater than the length of the filament bundles to be made, winding a filament around the vanes to provide a winding formed of left-hand and right-hand helices with turns of the left-hand and right-hand helices crossing over each other at crossing points, sliding the winding along the drum and thereby trellising the crossing points or rolling the winding up axially of the drum so that the axial length of the winding on the drum is reduced and the turns of the winding form an annular rope around the drum and then tying segments of the rope between adjacent vanes and cutting the segments from the drum, each segment forming a bundle.

The invention also consists in a hollow filament bundle for a separatory module made by the method in accordance with the invention.

An example of a method and of a hollow filament bundle in accordance with the invention will now be described with reference to the accompanying diagrammatic drawings in which:—

Figure 1 is a perspective view of a winding drum used in the winding of a hollow filament bundle;

Figure 2A is an end view of the drum of Figure 1 showing a plurality of filaments being wound upon it to form a bundle;

Figure 2B is a side view of the drum of Figure 1 with the filaments being wound upon it;

Figure 3 is a side view of a larger scale of one end of the drum showing a further step in the making of the bundle; and

Figure 4 is an end view to a larger scale of the drum with the filaments wound upon it and showing the turns of the filament winding being held together.

The main part of a winding machine used in carrying out the method of the invention is a large rotatable drum. In the drawings, a filament bundle in the process of being wound is indicated by the numeral 20 while the drum is indicated by the numeral 22. The drum has axially extending vanes 24. The size of the drum is such that the tangential distance between the tips of adjacent vanes 24 is equal to or slightly greater than the desired length of the filament bundles to be made on the drum.

The drum is rotated around its own axis and hollow filaments from a number of supply packages are wound helically around the vanes 24. A traversing mechanism 26 is provided so that alternating layers of the winding traverse in opposite directions, and create a winding pattern with a multiplicity of filament crossovers.

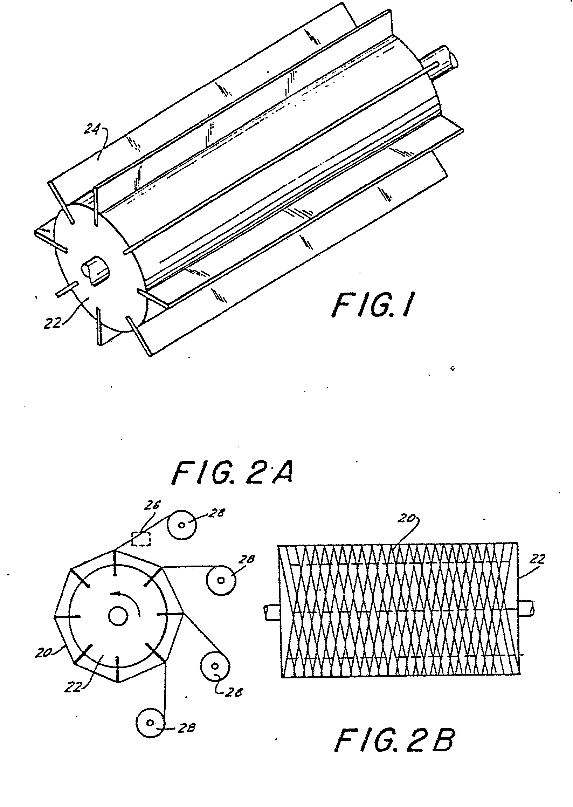

The filaments are wound on to the rotating drum as shown in Figures 2A and 2B. There can be a large number of supply packages 28 of hollow filaments, in order to shorten the time necessary to wind on the required number of filament turns. The winding pattern must also provide a level wind traverse, so that a pattern of left and right-hand helices, with multiple crossovers is created as shown in Figure 2B.

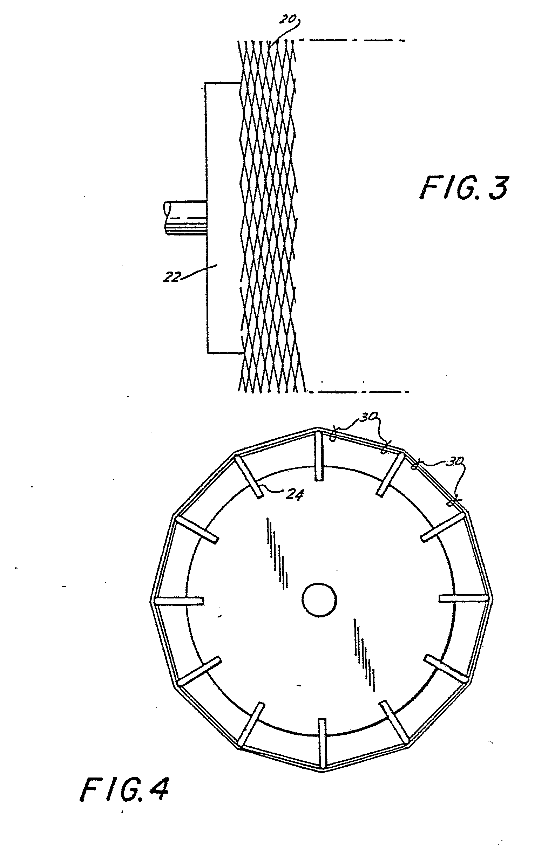

When the required number of turns have been applied to the drum they are roped together to form a circumferentially extending rope by sliding the turns axially along the drum so that they are all at one end of the drum as shown in Figures 3 and 4. This sliding step can be made easier if there is a provision for retracting the vanes 24 radially inwards to reduce the diameter of the drum slightly, or if the vanes are tapered towards one end, so that the drum has a slightly smaller diameter at one end than at the other. In the sliding step, the necessary crossover points of the helical turns will collapse together like a trellis, and the winding will assume a uniform packing density without parallel channels through the bundle. The exact geometry of the bundle will be dependent upon the axial length of the winding on the drum before roping, which is shown in Figure 4, upon the pitch of the helical winding, upon the width of the bundle after roping and upon the winding speed.

As an alternative to roping the filament bundles together, which reduces the helix angle of the filaments and tends to straighten the bundle, they may be rolled up on the drum. This prevents trellising of the filament crossover points, and preserves a more distinctly interlaced pattern in the bundle.

The roped or rolled-up bundle is tied or bound together by ties 30 between the vanes, and then individual segments of annular rope, each segment extending between adjacent vanes are cut off the winding drum, and are ready for potting the end seals, or other necessary processing steps to form the module. The cross-section of each segment which forms a bundle can be manipulated to provide a nearly circular or rectangular shape as may be necessary according to the end use of the module.

When the bundle has been built up to the desired final cross-section and has had its ends potted, it can be inserted in a cylindrical chamber and be sealed in the chamber to provide a completed module.

## Claims

1. A method of making coreless hollow filament bundles for separatory modules, the method comprising providing a drum (22) with a plurality of radially outwardly projecting and axially extending vanes (24) spaced apart around the drum so that the tangential distances between the radially outer edges of the vanes is equal to or greater than the length of the filament bundles to be made, winding a filament (20) around the vanes to provide a winding formed of left-hand and right-hand helices with turns of the left-hand and right-hand helices crossing over each other at crossing points, sliding the winding along the drum (22) and thereby trellising the crossing points or rolling the winding up axially of the drum (22) so that the axial length of the winding on the drum is reduced and the turns of the winding form an annular rope around the drum and then tying segments of the rope between adjacent vanes and cutting the segments from the drum, each segment forming a bundle.

2. A method according to Claim 1, in which the winding is formed by rotating the drum, and the filament is guided by axially oscillating guide means (26) to form the left-hand and right-hand helices.

3. A method according to Claim 1 or Claim 2, in which a plurality of filaments from packages (28) are wound simultaneously.

4. A method according to any one of the preceding Claims, in which the vanes (24) are retracted radially to facilitate the sliding or rolling up of the winding on the drum.

5. A method according to any one of Claims 1 to 3, in which the vanes are tapered to one end of the drum to facilitate the sliding or rolling up of the winding on the drum.

6. A coreless hollow filament bundle for a separatory module made by a method in accordance with any one of the preceding Claims.

## Revendications

1. Procédé de fabrication de faisceaux de filaments creux sans âme pour modules de séparation, le procédé consistant à utiliser un tambour (22) avec plusieurs ailettes (24) s'étendant axialement et faisant saillie radialement vers l'extérieur, espacées autour du tambour afin que les distances tangentielles comprises entre les bords radialement extérieurs des ailettes soient égales ou supérieures à la longueur des faisceaux de filaments à fabriquer, à bobiner un filament (20) autour des ailettes pour produire un bobinage formé d'hélices de pas à gauche et de pas à droite, avec des spires des hélices de pas à gauche et de pas à droite se croisant mutuellement en des points de croisement, à faire glisser le bobinage le long du tambour (22) et treillisser ainsi les points de croisement ou faire rouler le bobinage axialement le long du tambour (22) afin que la longueur axiale du bobinage sur le tambour soit réduite et que les spires du bobinage forment un câble annulaire autour du tambour, puis à attacher les segments du câble entre des ailettes adjacentes et à couper les segments et les retirer du tambour, chaque segment formant un faisceau.

2. Procédé selon la revendication 1, dans lequel le bobinage est formé par rotation du tambour, et le filament est guidé par des moyens de guidage (26) oscillant axialement pour former les hélices de pas à gauche et de pas à droite.

3. Procédé selon la revendication 1 ou la revendication 2, dans lequel plusieurs filaments provenant d'ensembles (28) sont bobinés simultanément.

4. Procédé selon l'une quelconque des revendications précédentes, dans lequel les ailettes (24) sont rétractées radialement pour faciliter le glissement ou le roulage du bobinage sur le tambour.

5. Procédé selon l'une quelconque des revendications 1 à 3, dans lequel les ailettes sont effilées vers une extrémité du tambour pour faciliter le glissement ou le roulage du bobinage sur le tambour.

6. Faisceau de filaments creux sans âme pour un module de séparation, fabriqué par un procédé selon l'une quelconque des revendications précédentes.

## Patentansprüche

1. Verfahren zur Herstellung kernloser Hohlfadenbündel für Trennungsmoduln und nach diesem Verfahren hergestellte Bündel, dadurch gekennzeichnet, daß eine Trommel (22) mit einer Vielzahl radial nach außen gerichteter und sich axial erstreckender Blätter (24) vorgesehen wird, die derart um die Trommel herum beabstandet voneinander angeordnet sind, daß die tangentialen Entfernungen zwischen den radialen Außenkanten der Blätter gleich oder größer sind als die Länge der herzustellenden Fadenbündel, und daß ein Filament- bzw. Fadenbündel (20) um die Blätter herumgewickelt wird, um eine aus links- und rechtsgerichteten Helices bzw. Spiralen bestehende Wicklung zu schaffen, wobei sich die Drehungen der links- und rechtsgerichteten Helices an den Kreuzungspunkten überschneiden und daß die Wicklung an der Trommel (22) entlang verschoben wird, wodurch eine Gitterkonstruktion der Kreuzungspunkte ausgebildet oder die Wicklung axial von der Trommel aufgewickelt wird, so daß die axiale Länge der Wicklung auf der Trommel verringert wird und die Drehungen bzw. Windungen der Wicklung einen ringförmigen Strang um die Trommel herum ausbilden, und daß danach die Abschnitte des Stranges zwischen den benachbarten Blättern verschnürt und die Segmente von der Trommel abgeschnitten werden, wobei jedes Segment ein Bündel ausbildet.

2. Verfahren nach Anspruch 1, dadurch gekennzeichnet, daß die Wicklung durch Drehen der Trommel ausgebildet wird, und daß die Fäden durch axial oszillierende Führungsmittel (26) unter Ausbildung links- und rechtsgerichteter Helices bzw. Spiralen geführt wird.

3. Verfahren nach Anspruch 1 oder 2, dadurch gekennzeichnet, daß eine Vielzahl an Fasern von Körpern (28) gleichzeitig gewickelt werden.

4. Verfahren nach einem der vorstehenden Ansprüche 1 bis 3, dadurch gekennzeichnet, daß die Blätter (24) radial zurückgezogen sind, um das Verschieben oder Aufwickeln der Wicklung auf die Trommel zu erleichtern.

5. Verfahren nach einem der Ansprüche 1 bis 3, dadurch gekennzeichnet, daß die Blätter an einem Ende der Trommel konisch zulaufen, um das Verschieben oder Aufwickeln der Wicklung auf die Trommel zu erleichtern.

6. Kernloses hohles Faserbündel für einen Trennungs-bzw. Separiermodul, gekennzeichnet durch die Herstellung nach einem oder mehreren der vorstehenden Ansprüche.

**0 021 582**

FIG. 1

24

22

FIG. 2A

26
28
28
20
22
22
28
28

20

22

FIG. 2B

1

FIG.3

FIG.4